(19) **Europäisches Patentamt**
**European Patent Office**
**Office européen des brevets**

(11) Veröffentlichungsnummer : **0 047 371 B2**

(12) ## NEUE EUROPÄISCHE PATENTSCHRIFT

(45) Veröffentlichungstag der neuen Patentschrift :
**13.03.91 Patentblatt 91/11**

(51) Int. Cl.$^5$ : **C08G 65/26, C08G 18/48**

(21) Anmeldenummer : **81105380.0**

(22) Anmeldetag : **10.07.81**

(54) **Verfahren zur Herstellung von hochaktivierten, hydroxylgruppenhaltigen Polyoxyalkylen-polyoxyethylenethern.**

(30) Priorität : **14.08.80 DE 3030737**

(43) Veröffentlichungstag der Anmeldung :
**17.03.82 Patentblatt 82/11**

(45) Bekanntmachung des Hinweises auf die
Patenterteilung :
**13.02.85 Patentblatt 85/07**

(45) Bekanntmachung des Hinweises auf die
Entscheidung über den Einspruch :
**13.03.91 Patentblatt 91/11**

(84) Benannte Vertragsstaaten :
**AT BE CH DE FR GB IT LI NL**

(56) Entgegenhaltungen :
**CH-A- 361 135**

(56) Entgegenhaltungen :
**DE-A- 1 569 055**
**DE-B- 1 240 062**
**FR-A- 1 413 774**
**US-A- 2 782 240**
**US-A- 4 273 913**

(73) Patentinhaber : **BASF Aktiengesellschaft**
**Carl-Bosch-Strasse 38**
**W-6700 Ludwigshafen (DE)**

(72) Erfinder : **Denni, Raymond, Dr.**
**Erlenweg 19**
**W-6706 Wachenheim (DE)**
Erfinder : **Marx, Matthias, Dr.**
**Seebacher Strasse 49**
**W-6702 Bad Duerkheim (DE)**
Erfinder : **Straehle, Wolfgang, Dr.**
**Hirschgasse 20**
**W-6900 Heidelberg (DE)**

EP 0 047 371 B2

## Beschreibung

Die Erfindung betrifft ein Verfahren zur Herstellung von hochaktivierten Polyoxyalkylen-polyoxyethylenethern mit einem hohen Gehalt an primären Hydroxylgruppen von mindestens 66,4% durch Polymerisation von

a) durch Polymerisation von Alkylenoxiden, ausgewählt aus der Gruppe von 1,2 und 2,3-Butylenoxid, Styroloxide, Cyclohexenoxid und 1,2-Propylenoxid oder Mischungen aus den genannten Alkylenoxiden und Ethylenoxid an ein Startermolekül mit reaktiven Wasserstoffatomen in Gegenwart von 0,01 bis 0,25 Mol basischem Katalysator pro Äquivalent reaktiven Wasserstoffatom zu Beginn der Reaktion, bis zu einem Umsatz von 20 Gew.% des zugeführten Ainglenoxids,

b) Erhöhung der Katalysatormenge mit fortschreitender Polymerisation mit der Maßgabe, daß pro Äquivalent reaktivem Wasserstoffatom des Startmoleküls 0,10 bis 0,3 Mol basischer Katalysator im Reaktionsgemisch vorliegen,

c) zu Ende führen der Polymerisation und

d) Abstrigruppen der nicht umgesetzsen Ainglenoxide

e) Nachpolymerisieren des erhaltenen rohen Polyetherols mit maximal 30% Ethylenoxid, bezogen auf das Polyetherolgewicht.

Die Herstellung von Polyoxyalkylenethern durch Polymerisation von Alkylenoxiden, die sich an ein Startermolekül mit Zerewitinoff aktiven Wasserstoffatomen in Gegenwart von basischen Katalysatoren addieren, ist bekannt. Als basische Katalysatoren werden üblicherweise Alkalihydroxide oder Alkoholate verwendet, die für Polyoxyalkylenether mit Hydroxylzahlen bis 28 in Mengen bis maximal 0,06 Mol pro Äquivalent Zerewitinoff aktivem Wasserstoffatom des Startermoleküls eingesetzt werden. Man erhält Polyoxyalkylenether mit freien Hydroxylgruppen, von denen ein Teil aufgrund des basischen Reaktionsmediums endständige Alkoholargruppen trägt. Für die weitere Verwendung der Polyoxyalkylenether, z. B. zum Herstellen von Polyurethanen, ist es notwendig, die Alkoholatreste der Polymerisate, beispielsweise durch Neutralisation mit Säuren, in freie Hydroxylgruppen überzuführen.

Aktivierte Polyoxyalkylenether werden üblicherweise durch Anlagerung von Ethylenoxid an Polyoxypropylenether oder Polyoxyathyler-polyoxypropylenather hergestellt, wobei die Oxyethylen- und Oxypropylengruppen in den Mischpolymerisaten statistisch oder blockweise angeordnet sein können. Hierbei wird die Reaktivität des Polyoxyalkylenethors durch die Menge an polymerisiertem Ethylenoxid im Endblock bestimmt. So besitzen beispielsweise typische Polyoxyalkylenether für Polyurethan-Kaltformschaumstoffe mit einer Hydroxylzahl von 35 und der Struktur Glycerin-polyoxypropylen-polyoxyethylen mit einem Gehalt an Ethylenethergruppen im Endblock von 15% ungefähr 75% primäre Hydroxylgruppen und mit einem Gehalt von 10% ungefähr 64% primäre Hydroxylgruppen.

Nach Angaben der DE-A-1 569 055 werden zur Verhinderung der Bildung von endständigen, olefinisch ungesättigten Bindungen an höhermolekulare Polyoxyalkylen-polyole, insbesondere Polyoxypropylen-polyole, beispielsweise solche mit einem Molekulargewicht von 545 und größer, Ethylenoxid allein oder im Gemisch mit bis zu 40 Gew.-% 1,2-Propylenoxid polymerisiert. Die verwendete Menge an Ethylenoxid beträgt hierzu ungefähr 5 bis 15 Gew.-%, bezogen auf das erhaltene Endprodukt, wobei der Gehalt an primären Hydroxylgruppen in Abhängigkeit von der eingesetzten Ethylenoxidmenge zunimmt und bei einem Gehalt von ungefähr 15 Gew.-% Ethylenoxid mit ungefähr 60 % primären Hydroxylgruppen einen Grenzwert erreicht.

Nach Angaben der DE-B-1 240 062 werden zur Vereinheitlichung des Molekulargewichts sekundäre monofunktionelle Alkohole mit 8 bis 20 Kohlenstoffatomen mit mindestens 0,5 Molen Alkalimetall, vorzugsweise jedoch möglichst quantitativ, in die entsprechenden Alkoholate übergeführt und in dieser Form einstufig mit Ethylenoxid oder 1,2-Propylenoxid oxalkyliert.

In praktisch analoger Weise, jedoch in Gegenwart von Lösungsmitteln, werden gemäß US-A-2 782 240 die Alkalimetallsalze von Monohydroxyverbindungen mit 1,2-Alkylenoxiden, wie z.B. Ethylen-, Propylen- oder Butylenoxid, zu Monoethern von Polyoxyalkylenglykolen mit einheitlicher Kettenlänge umgesetzt und diese ohne zusätzliche Katalysatorzugabe in die Polyoxyalkylendiether übergeführt. Die nach den beiden zuletzt genannten Verfahren hergestellten Polyoxyalkylenverbindungen sind monofunktionell oder besitzen keine mit Isocyanatgruppen reaktive Substituenten, d.h. die Polyoxyalkylenverbindungen sind zur Herstellung hochmolekularer Polyurethankunststoffe unbrauchbar.

Ein wegen der Reaktivität notwendiger hoher Gehalt an Oxyethylengruppen im Polyoxyalkylenether kann die Schaumstoffeigenschaften störend beeinflussen. So neigen Polyurethanschaumstoffe aus Ethylenoxid reichen Polyoxyalkylenethern zur Bildung von geschlossenen Schaumzellen. Ferner verschlechtert sich, das mechanische Eigenschaftsniveau in Gegenwart von Feuchtigkeit, da die Schaumstoffe zu hydrophil sind.

Die Aufgabe der vorliegenden Erfindung bestand darin in Polyoxyalkylenethern, insbesondere solchen mit einem geringen Gehalt an Oxyethylengruppen, den Anteil an primären Hydroxylgruppen zu erhöhen ohne gleichzeitig den Oxyethylenethergehalt nennenswert zu verändern.

Überraschenderweise wurde gefunden, daß sich durch eine Erhöhung der Konzentration an basischen Katalysatoren bei der Polymerisation bei gleichem Ethylenoxidgehalt der Anteil an primären Hydroxylgruppen im Polyoxyalkylenether beträchtlich erhöhen läßt

Gegenstand der vorliegenden Erfindung ist somit ein Verfahren zur Herstellung von hydroxylgrup penhaltigen Polyoxyalkylen-polyoxyethylenethern mit einem Gehalt an primären Hydroxylgruppen von mindestens 66,4% durch Polymerisation von gegebenenfalls substituierten Alkylenoxiden und Ethylenoxid an mindestens ein Startermolekül mit mindestens einem Zerewitinoff aktiven Wasserstoffatom in Gegenwart von basischen Katalysatoren, das dadurch gekennzeichnet ist, daß man an

a) hydroxylgruppenhaltige Verbindungen mit Molekulargewichten bis 342 und 2 bis 8 Zerewitinoff aktiven Wasserstoffatomen mit Ausnahme von Wasser als Startermoleküle Alkylenoxide, ausgewählt aus der Gruppe von 1,2- und 2,3-Butylenoxid, Styroloxide, Cyclohexenoxid und 1,2-Propylenoxid oder Mischungen aus den genannten Alkylenoxiden und Ethylenoxid im Gewichtsverhältnis von 100 : 0 bis 60 : 40 mit zu Beginn der Reaktion 0,01 bis 0,25 Mol basischem Katalysator pro Äquivalent Zerewitinoff aktivem Wasserstoffatom des Startermoleküls bis zu einem Umsatz von mindestens 20 Gew.-% des zugeführten Alkylenoxids polymerisiert, wobei vor der Polymerisation das bei der Alkoholatbildung entstehende Wasser bzw. der niedrigsiedende Alkohol abgetrennt wird,

b) danach mit fortschreitender Polymerisation die Katalysatormenge erhöht mit der Maßgabe, daß pro Äquivalent Zerewitinoff aktivem Wasserstoffatom des Startermoleküls 0,10 bis 0,3 Mol basischer Katalysator im Reaktionsgemisch vorliegen und nach jeder Katalysatorzugabe das bzw. der bei der Alkoholatbildung entstehende Wasser oder niedrigsiedende Alkohol abgetrennt wird,

c) zu Ende polymerisiert,

d) die nicht umgesetzten genannten Alkylenoxide oder Mischungen aus den genannten substituierten Alkylenoxiden und Ethylenoxid abstrippt und

e) in Gegenwart der zugeführten Menge an basischem Katalysator das erhaltene rohe Polyetherol mit maximal 30 Gewichtsprozent Ethylenoxid, bezogen auf das Gewicht des rohen Polyetherols, nachpolymerisiert.

Das erfindungsgemäße Verfahren weist den Vorteil auf, daß bei gleichem Gehalt an Oxyethylengruppen im Polymerisat im Vergleich zu üblichen Verfahren die Zahl an primären Hydroxygruppen um ungefähr 10 bis 25% erhöht werden kann.

Es ist daher möglich hochaktivierte, hydroxylgruppenhaltige Polyoxyalkylen-polyoxyethylenether mit kleinen Gehalten an hydrophilen Oxyethylengruppen herzustellen.

Nach dem erfindungsgemäßen Verfahren werden in der Stufe (a) die genannten Alkylenoxide oder Mischungen aus dengenannten Alkylenoxiden und Ethylenoxid in Gegenwart von zu Beginn der Reaktion 0,01 bis 0,25 Mol, vorzugsweise 0,10 bis 0,25 Mol basischem Katalysator pro Äquivalent Zerewitinoff aktivem Wasserstoffatom des Startermoleküls polymerisiert. Verwendet man zu Beginn der Polymerisation weniger als 0,01 Mol basischen Katalysator pro Äquivalent reaktivem Wasserstoffatom des Startermoleküles, so verläuft die Reaktion aufgrund der geringen Katalysatorkonzentration zu langsam. Mengen von mehr als 0,25 Mol an basischem Katalysator pro Äquivalent reaktivem Wasserstoffatom bei Reaktionsbeginn führen ebenfalls zu einer Verlangsamung der Polymerisation, da die Alkylenoxide im Reaktionsmedium kaum mehr löslich sind. Schwierigkeiten ergeben sich außerdem beim Mischen der Alkylenoxide mit dem Reaktionsmedium. Ferner steigt der Gehalt an olefinisch ungesättigten Doppelbindungen im erhaltenem ohen Polyetherol sehr stark an.

Erst mit fortschreitender Polymerisation (b) und damit verbundener Erhöhung des Molekulargewichts der Polymerisate verbessert sich die Mischbarkeit der Alkylenoxide mit dem Reaktionsmedium. In dieser Reaktionsphase, die nach einem Umsatz von 20% der zugeführten Alkylenoxide, gegebenenfalls im Gemisch mit Ethylenoxid, beginnt, wird die Katalysatormenge stufenweise oder in einem Schritt erhöht, so daß 0,10 bis 0,3 Mol, vorzugsweise 0,12 bis 0,3 Mol basischer Katalysator pro Äquivalent Zerewitinoff aktivem Wasserstofatom des Startermoleküls im Reaktionsgemisch vorliegen. Hierbei hat es sich als vorteilhaft erwiesen, pro Äquivalent Zerewitinoff aktivem Wasserstoffatom des Startermoleküls für den Hydroxylzahlbereich 200 bis 25 0,1 bis 0,3 Mol und für den Hydroxylzahlbereich 24 bis 20 0,12 bis 0,3 Mol basischen Katalysator einzusetzen. Erfolgt die Erhöhung der Katalysatormenge stufenweise, so wird nach jeder Katalysatorzugabe weiter polymerisiert (c), so lange bis ein Umsatz von 100% erreicht ist.

Das erhaltene rohe Polyetherol wird danach in Gegenwart der zugeführten Katalysatormenge von 0,10 bis 0,3, Mol basischem Katalysator pro reaktivem Wasserstoffatom mit maximal 30 Gewichtsprozent, vorzugsweise 1 bis 25 Gewichtsprozent und insbesondere 3 bis 15 Gewichtsprozent Etylenoxid, bezogen auf das Gewicht des rohen Polyetherols, nachpolymerisiert. 30 Gewichtsprozent Etylenoxid ergeben je nach Äquivalentgewicht des radhen Polyetherols, z. B. bei Äquivalentgewichten von 300 bis 3000, Ethoxilierungsgrade von 2 his 20, wobei der Ethoxilierungsgrad definiert ist als Quotient aus der Anzahl der endständigen Oxyethyleneinheiten und der Funktionalität des hydroxylgruppenhaltigen Polyoxyalkylen-polyoxyethylenethers.

Als zusätzlicher Vorteil zeigte sich hierbei, daß nach dem erfindungsgemäßen Verfahren trotz der hohen Konzentration an basischen Katalysatoren der Gehalt an olefinisch ungesättigten Doppelbindungen im Polymerisat nahezu konstant bleibt, d. h., daß keine weitere Dehydratisierung auftritt bzw. keine Umlagerung des Propylenoxids in Alylalkohol stattfindet.

Im einzelnen werden die hydroxylgruppenhaltigen Polyoxyalkylen-polyoxyethylenether vorteilhafterweise wie folgt hergestellt :

Die hydroxylgruppenhaltigen Startermoleküle – werden aminogruppenhaltige Verbindungen verwendet, so wird zunächst an jedes Äquivalent reaktiven Wasserstoff katalysatorfrei mindestens ein Mol Alkylenoxid addiert und das erhaltene Additionsprodukt als Startermolekül eingesetzt – werden mit 0,01 bis 0,25 Mol mindestens eines basischen Katalysators pro Äquivalent Hydroxylgruppe partiell in die entsprechenden Alkoholate übergeführt. Je nach verwendetem Katalysator wird danach gegebenenfalls gebildetes Wasser oder niedrig siedender Alkohol, zweckmäßigerweise unter vermindertem Druck, abdestilliert und bei Temperaturen von 50° bis 150°C, vorzugsweise 80° bis 130°C, die gegebenenfalls mit einem unter den Reaktionsbedingungen inerten Gas, beispielsweise Stickstoff, verdünnten Alkylenoxide und Ethylenoxid im Gewichtsverhältnis von 100 : 0 bis 60 : 40, vorzugsweise von 99,5 : 0,5 bis 80 : 20 in dem Maße wie sie abreagieren, beispielsweise in 4 bis 30 Stunden, vorzugsweise 6 bis 10 Stunden bei Atmosphärendruck oder gegebenenfalls unter erhöhtem Druck bei 1,1 bis 20 bar, vorzugsweise 1,1 bis 7 bar in das Reaktionsmedium eingetragen.

Nach einem Umsatz von mindestens 20% wird die Polymerisation zur Erhöhung der Katalysatorkonzentration unterbrochen. Hierzu werden jedoch zunächst die nicht umgesetzten gegebenenfalls Ethylenoxid-haltigen Alkylenoxide vorzugsweise unter vermindertem Druck abgetrennt und nach der Katalysatorzugabe gebildetes Wasser oder niedrigsiedender Alkohol abdestilliert bevor die Polymerisation fortgesetzt werden kann. Dieser Vorgang Kann sich bei der stufenweisen Erhöhung der Katalysatormenge mehrfach, beispielsweise 2-bis 10 fach wiederholen.

Die erfindungsgemäß hergestellten alkalihaltigen Polyoxyalkylen-polyoxyethylenether werden nach Abdestillation des überschüssigen Ethylenoxids mit anorganischen Säuren, wie z.B. Schwefelsäure, Salzsäure oder Phosphorsäure, sauer reagierenden Salzen, wie z.B. Kaliumhydrogenphosphat, organischen Säuren, wie z.B. Zitronensäure, Tartronsäure u.a. oder Ionenaustauschern neutralisiart und nach bekannten Methoden gereinigt.

Zu den für das erfindungsgemäße Verfahren verwendeten Ausgangsstoffen und basischen Katalysatoren ist folgendes auszuführen :

Geeignete Alkylenoxide im Sinne der Erfindung sind 1,2- und 2,3-Butylenoxid, gegebenenfalls an der Phenylgruppe substituierte Styroloxide, Cyclohexenoxid, lund vorzugsweise 1,2-Propylenoxid. Zu der genannten Verbindungsklasse gehört auch Ethylenoxid, das jedoch in der Beschreibung stets separat davon genannt wird. Zur Herstellung der rohen, zur Nachpolymerisation verwendbaren Polyetherole können die gegebenenfalls substituierten Alkylenoxide einzein, alternierend nacheinander, als Mischungen oder als Ethylenoxid-haltige Mischungen eingesetzt werden.

Als Startermoleküle kommen Verbindungen mit Molekulargewichten bis 342 (mit Ausnahm von wasso) und 2 bis 8 einem Zerewitinoff aktiven Wasserstoffatom in Betracht. Vorzugsweise verwendet werden di- bis tetrafunktionelle Polyamine und di- bis octafunktionelle, vorzugsweise di- bis trifunktionelle Polyole. Im einzelnen seien beispielhaft genannt :

Ammoniak, Hydrazin, aliphatische und aromatische, gegebenenfalls N-mono-, N, N- und N, N'-dialkylsubstituierte Diamine mit 1 bis 4 Kohlenstoffatomen im Alkylrest, wie gegebenenfalls mono- und dialkylsubstituiertes Etylendiamin, Diethylentriamin, Triethylentetramin, 1,3-Propylendiamin, 1,3-bzw. 1,4-Butylendiamin, 1,2-, 1,3-, 1,4-, 1,5- und 1,6-Hexamethylendiamin, Phenylendiamine, 2,4- und 2,6-Toluylendiamin und 4,4'-, 2,4'- und 2,2'-Diaminodiphenylmethane : Monoamine, wie Methylamin, Ethylamin, Isopropylamin, Butylamin, Benzylamin, Anilin, die Toluidine und Naphtylamine und Alkanolamine, wie Ethanolamine, Diethanolamin, N-Methyl- und N-Ethyl-diethanolamin, N-Methyl- und N-Ethyl-diethanolamin und Triethanolamin ; Vorzugsweise verwendet werden mehrwertige, insbesondere zwei- und/oder dreiwertige Alkohole, wie Etylenglykol, 1,2- und 1,3-Propylenglykol, Diethylenglykol, Dipropylenglykol, 1,4-Butylenglykol, 1,6-Hexamethylenglykol, Glycerin, Trimethylol-propan, Pentaerythrit, Sorbit und Saccharose.

Gebräuchliche Katalysatoren sind Alkalialkoxide mit 1 bis 4 Kohlenstoffatomen im Alkylrest, wie Natriummethylat, Natrium- und Kaliumethylat, Kaliumisopropylat und Natriumbutylat, Erdalkalihydroxide, wie z.B. Calciumhydroxid und vorzugsweise Alkalihydroxide, wie Lithium- und insbesondere Natrium- und Kaliumhydroxid.

Die nach dem erfindungsgemäßen Verfahren hergestellten hydroxylgruppenhaltigen Polyoxyalkylen-polyoxyethylenether besitzen Hydroxyzahlen von 200 bis 20, vorsugsweise 80 bis 25 und Funktionalitäten von 2 bis 8, vorzugsweise 2 bis 3. Sie besitzen durchschnittlich 10 bis 25% absolut mehr primäre Hydroxylgruppen als nach bekannten Verfahren erhaltene Polyalkylenether-polyole.

Die Produkte eignen sich insbesondere zur Herstellung von Polyurethankunststoffen.

Vergleichsbeispiele A bis C

Allgemeine Herstellungsvorschrift

Die hydroxylgruppenhaltigen Polyoxyalkylen-polyoxyethylenether werden nach einem 4 Stufenverfahren hergestellt, wobei sich die Oxalkylierung jedoch je nach den technischen Gegebenheiten gegebenenfalls in noch mehr Reaktionsstufen unterteilen läßt. Bei der beschriebenen Verfahrensvariante werden die gegebenenfalls substituierten Alkylenoxide oder Gemische mit Ethylenoxid mit zu Beginn der Reaktion ungefähr 0,06 Mol Kaliumhydroxid pro Äquivalent rekativem Wasserstoffatom des Startermoleküls polymerisiert. Nach einem Umsatz von 100% wird die Katalysatorkonzentration in einem Schritt mit unterschiedlichen Katalysatormengen erhöht und mit Ethylenoxid nachpolymerisiert.

1. Stufe

Das Startermolekül wird im Reaktor vorgelegt und mit einer 45 gewichtsprozentigen wäßrigen Kaliumhydroxidlösung gemischt. Zur Bildung des Alkoholats wird die Mischung unter vermindertem Druck und Abdestillieren von Wasser 1,5 Stunden auf 130°C erwärmt.

2. Stufe

Das Propylenoxid oder eine Mischung aus Propylenoxid und Ethylenoxid wird bei einer Temperatur von 105°C in einer solchen Menge zugeführt, daß ein Druck von maximal 7 bar nicht überschritten wird. Nach Beendigung der Alkylenoxidzugabe und einer Nachreaktion von 4 bis 5 Stunden wird die Reaktionsmischung zur Abtrennung des Restmonomeren gestrippt.

3. Stufe

Die Reaktionsmischung wird mit zusätzlichem Katalysator gemischt und zur Abtrennung des bei der Alkoholatbildung entstehenden Reaktionswassers so lange unter vermindertem Druck auf 120°C erwärmt bis kein Wasser mehr abdestilliert.

4. Stufe

Das Ethylenoxid wird analog der 2. Stufe bei 105°C und einem maximalen Druck von 5 bar zudosiert. Nach Abreaktion des Ethylenoxids wird die Reaktionsmischung zur Entfernung der Restmonomeren unter vermindertem Druck gestrippt und nach bekannten Methoden aufgearbeitet.

Die verwendeten Ausgangskomponenten und deren Mengen sowie die Kenndaten der erhaltenen hydroxylgruppenhaltigen Polyoxyalkylen-polyoxyethylenether sind in Tabelle 1 zusammengefaßt.

5

Tabelle 1

| Ausgangskomponenten Reaktionsbedingungen | Vergleichs- beispiel A | Vergleichs- beispiel B | Vergleichs- beispiel C |
|---|---|---|---|
| 1. Stufe : Starter : | | | |
| Glycerin, [g] | 64,5 | 103,3 | — |
| Propylenglykol, [g] | — | — | 223,82 |
| 45gew.-%ige wäßrige KOH, [g] | 16,3 | 23,0 | 26,8 |
| KOH/reaktive H-Atome, [Mol] | 0,062 | 0,054 | 0,036 |
| 2. Stufe : | | | |
| Propylenoxid, [g] | 3 255 | 4 977 | 5 198 |
| Ethylenoxid, [g] | — | — | — |
| max. Druck, [bar] | 6 | 6,5 | 6,0 |
| Hydroxylzahl | 38,8 | 40,5 | 68,2 |
| primäre Hydroxylgruppen, [%] | 0 | 0 | 0 |
| 3. Stufe : | | | |
| 45gew.-%ige wäßrige KOH, [g] | — | — | — |
| KOH/reaktive H Atome, [Mol] | — | — | — |
| 4. Stufe : | | | |
| Ethylenoxid, [g] | 362 | 810 | 577 |
| max. Druck, [bar] | 5,0 | 5,0 | 4,0 |
| hydroxylgruppenhaltige Polyoxyalkylenpo- lyoxyethylenether : | | | |
| Hydroxylzahl | 35,8 | 34,8 | 61,7 |
| primäre Hydroxylgruppen, [%] | 64 | 76 | 50,0 |
| ungesättigte Arteile, [Gew.-%] | 0,059 | 0,06 | 0,04 |
| Säurezahl    0,01 | 0,01 | 0,01 | |
| Wassergehalt, [Gew.-%] | 0,02 | 0,03 | 0,03 |

Beispiele 1 und 2 und Vergleichsbeispiel

Allgemeine Herstellungsvorschift

Die hydroxylgruppenhaltigen Polyoxyalkylenpolyoxyethylenether werden nach einem Vielstufenverfahren hergestellt. Die Anzahl der Stufen hängt unter anderem davon ab in wieviel Teilmengen die Katalysatormenge unterteilt und der Reaktionsmischung einverleibt wird.

Die Herstellung des Alkoholats in der 1. Stufe erfolgt analog den Angaben Vergleichsbeispiele. Nach jeder Katalysatorzugabe wird das Wasser unter vermindertem Druck bei 130°C in 2 Stunden abgetrennt.

Die verwendeten Ausgangskomponenten und deren Mengen sowie die Kenndaten der erhaltenen Polyoxypropylen-polyoxyethylenether sind in Tabelle zusammengefaßt.

Tabelle 2

| Ausgangskomponenten Reaktionsbedingungen | Beispiele 1 | 2 | Vergleichs- beispiel D |
|---|---|---|---|
| 1. Stufe : Starter : | | | |
| Propylenglykol, [g] | 76,1 | 76,1 | 76,1 |
| 45gew.-%ige wässerige KOH, [g] | 17,4 | 17,4 | 17,4 |
| KOH/reaktive H-Atome, [Mol] | 0,07 | 0,07 | 0,07 |
| 2. Stufe : | | | |
| Propylenoxid, [g] | 1 195 | 1 195 | 1 195 |
| Hydroxylzahl | 102 | 101 | 103 |
| 3. Stufe : | | | |
| 45gew.-%ige wäßrige KOH, [g] | 20,7 | 10,35 | — |
| KOH/reaktive H-Atome, [Mol] | 0,063 | 0,041 | — |
| 4. Stufe : | | | |
| Propylenoxid, [g] | 1 195 | 600 | 1 195 |
| Ethylenoxid, [g] | — | 595 | — |
| Hydroxylzahl | 54 | 52 | 53 |
| 5. Stufe : | | | |
| 45gew.-%ige wäßrige KOH, [g] | — | 10,35 | — |
| KOH/reaktive H-Atome, [Mol] | — | 0,041 | — |
| 6. Stufe : | | | |
| Propylenoxid, [g] | 1 195 | 1 195 | 1 195 |
| 7. Stufe : | | | |
| 45gew.-%ige wäßrige KOH, [g] | 10,35 | 10,35 | — |
| KOH/reaktive H-Atoms, [Mol] | 0,041 | 0,041 | — |
| Hydroxylzahl | 36,2 | 34,2 | 35 |
| primärer Hydroxylgruppen, [%] | 0 | 0 | 0 |
| 8. Stufe : | | | |
| Ethylenoxid, [g] | 920 | 920 | 920 |
| maximaler Druck, [bar] | 4,5 | 4,0 | 5,0 |
| hydroxylgruppenhaltige Polyoxypropylen- polyoxyethylenether | | | |
| Hydroxylzahl | 28,5 | 27,5 | 28 |
| primäre Hydroxylgruppen, [%] | > 95 | > 95 | 81 |
| Jodzahl | 1,55 | 1,51 | 1,51 |
| ungesättigte Anteile, [Gew. -%] | 0,055 | 0,050 | 0,057 |
| Säurezahl | 0,01 | 0,01 | 0,01 |
| Wassergehalt, [Gew.-%] | 0,03 | 0,02 | 0,02 |

Vergleichsbeispiel

Man verfährt analog den Angaben der Vergleichsbeispiele.

Die verwendeten Ausgangskomponenten und deren Mengen sowie die Kenndaten der erhaltenen hydroxylgruppenhaltigen Polyoxyalkylen-polyoxyethylenether sind in Tabelle 4 zusammengefaßt.

EP 0 047 371 B2

Tabelle 3

| Ausgangskomponenten Reaktionsbedingungen | Vergleichs-beispiel E |
|---|---|
| 1. Stufe : Starter : | |
| Propylenglykol, [g] | 76,09 |
| 45gew.-%ige KOH, [g] | 9,5 |
| KOH/reaktive H-Atome, [Mol] | 0,038 |
| 2. Stufe : | |
| Propylenoxid, [g] | 1 690 |
| max. Druck, [bar] | 5,5 |
| Hydroxylzahl | 64 |
| 3. Stufe : | |
| 45gew.-%ige wäßrige KOH, [g] | — |
| KOH/reaktive H-Atome, [Mol] | — |
| 4. Stufe : | |
| Ethylenoxid, [g] | 371 |
| Ethoxylierungsgrad | 4,25 |
| (unter Berücksichtigung der ungesättigten Anteile) | |
| max. Druck, [bar] | 3,8 |
| hydroxylgruppenhaltige Polyoxyalkylen-polyoxyethylenether : | |
| Hydroxylzahl | 52,5 |
| primäre Hydroxylgruppen, [%] | 70 |
| ungesättigte Anteile, [Gew.-%] | 0,02 |
| Säurezahl | < 0,01 |
| Wassergehalt, [Gew.-%] | 0,03 |

## Ansprüche

1. Verfahren zur Herstellung von hydroxylgruppenhaltigen Polyoxyalkylen-polyoxyethylethern mit einem Gehalt an primären Hydroxylgruppen von mindestens 66,4 % durch Polymerisation von gegebenenfalls substituierten Alkylenoxiden und Ethylenoxid an mindestens ein Startermolekül mit mindestens einem Zerewitinoff aktiven Wasserstoffatom in Gegenwart von basischen Katalysatoren, dadurch gekennzeichnet, daß man an

a) hydroxylgruppenhaltige Verbindungen mit Molekulargewichten bis 342 und 2 bis 8 Zerewitinoff aktiven Wasserstoffatomen mit Ausnahme von Wasser als Startermoleküle Alkylenoxide, ausgewählt aus der Gruppe von 1,2- und 2,3-Butylenoxid, Styroloxide, Cyclohexenoxid und 1,2-Propylenoxid oder Mischungen aus den genannten Alkylenoxiden und Ethylenoxid im Gewichtsverhältnis von 100 : 0 bis 60 : 40 mit zu Beginn der Reaktion 0,01 bis 0,25 Mol basischem Katalysator pro Äquivalent Zerewitinoff aktivem Wasserstoffatom des Startermoleküls bis zu einem Umsatz von mindestens 20 Gew.-% des zugeführten Alkylenoxids polymerisiert, wobei vor der Polymerisation das bei der Alkoholatbildung entstehende Wasser bzw. der niedrigsiedende Alkohol abgetrennt wird,

b) danach mit fortschreitender Polymerisation die Katalysatormenge erhöht mit der Maßgabe, daß pro Äquivalent Zerewitinoff aktivem Wasserstoffatom des Startermoleküls 0,10 bis 0,3 Mol basischer Katalysator im Reaktionsgemisch vorliegen und nach jeder Katalysatorzugabe das bzw. der bei der Alkoholatbildung entstehende Wasser oder niedrigsiedende Alkohol abgetrennt wird,

c) zu Ende polymerisiert,

d) die nicht umgesetzten genannten Alkylenoxide oder Mischungen aus den genannten substituierten Alkylenoxiden und Ethylenoxid abstrippt und

e) in Gegenwart der zugeführten Menge an basischem Katalysator das erhaltene rohe Polyetherol mit maximal 30 Gewichtsprozent Ethylenoxid, bezogen auf das Gewicht des rohen Polyetherols, nachpolymerisiert.

8

## Claims

1. A process for the preparation of a hydroxyl-containing polyoxyalkylenepolyoxyethylene ether containing not less than 66.4% of primary hydroxyl groups by polymerization of unsubstituted or substituted alkylene oxides and ethylene oxide with one or more initiator molecules having one or more Zerewitinoff active hydrogen atoms in the presence of a basic catalyst, wherein

a) alkylene oxides selected from the group consisting of 1,2- and 2,3-butylene oxide, styrene oxides, cyclohexene oxide and 1,2-propylene oxide, or a mixture of the stated alkylene oxides, and ethylene oxide in a weight ratio of from 100 : 0 to 60 : 40 are polymerized using hydroxyl-containing compounds having molecular weights of up to 342 and from 2 to 8 Zerewitinoff active hydrogen atoms, with the exception of water, as initiator molecules, using at the beginning of the reaction from 0.01 to 0.25 mole of basic catalyst per equivalent of Zerewitinoff active hydrogen atom of the initiator molecule, polymerization being continued to a conversion of not less than 20% by weight of the added alkylene oxide, and the water obtained during alcohol formation or the low boiling alcohol being separated off before the polymerization,

b) the amount of catalyst is then increased as the polymerization progresses, with the proviso that from 0.10 to 0.3 mole of basic catalyst is present in the reaction mixture per equivalent of a Zerewitinoff active hydrogen atom of the initiator molecule and, after each addition of catalyst, the water obtained during alcoholate formation or the low boiling alcohol is separated off,

c) polymerization is completed,

d) the unconverted stated alkylene oxides or mixtures of the stated substituted alkylene oxides and ethylene oxide are stripped off and

e) the resulting crude polyetherol containing not more than 30% by weight, based on the weight of the crude polyetherol, of ethylene oxide, is further polymerized in the presence of the added amount of basic catalyst.

## Revendications

1. Procédé de préparation d'éthers de polyoxyalkylène-polyoxyéthylène contenant des groupes hydroxy, à une teneur en groupes hydroxy primaires d'au moins 66,4%, par polymérisation d'oxydes d'alkylène éventuellement substitués et de l'oxyde d'éthylène sur au moins une molécule de départ contenant au moins un atome d'hydrogène actif selon Zerewitinoff en présence de catalyseurs basiques, caractérisé par le fait que :

a) sur des composés contenant des groupes hydroxy, à des poids moléculaires allant jusqu'à 342, et contenant 2 à 8 atomes d'hydrogène actif selon Zerewitinoff – l'eau étant exclue – qui servent de molécules de départ, on polymérise des oxydes d'alkylène choisis dans le groupe formé par l'oxyde de 1,2- et de 2,3-butylène, les oxydes de styrène, l'oxyde de cyclohexène et l'oxyde de 1,2-propylène ou des mélanges de ces oxydes d'alkylène et de l'oxyde d'éthylène dans des proportions relatives en poids de 100 : 0 à 60 : 40, avec, au début de la réaction, 0,01 à 0,25 mole d'un catalyseur basique par équivalent d'atome d'hydrogène actif selon Zerewitinoff de la molécule de départ, jusqu'à un taux de conversion d'au moins 20% en poids de l'oxyde d'alkylène introduit, en séparant avant la polymérisation l'eau ou l'alcool volatil libéré à la formation de l'alcoolate,

b) on accroit ensuite, au fur et à mesure que la polymérisation progresse, la quantité de catalyseur, sous réserve que le mélange de réaction contienne de 0,10 à 0,3 mole du catalyseur basique par équivalent d'atome d'hdrogène actif selon Zerewitinoff de la molécule de départ et que, après chaque addition du catalyseur, on sépare l'eau ou l'alcool volatil libéré à la formation de l'alcoolate,

c) on achève la polymérisation,

d) on élimine par évaporation les oxydes d'alkylène en question ou les mélanges des oxydes d'alkylène substitués en question et de l'oxyde d'éthylène, qui n'ont pas été convertis, et

e) on soumet le polyéther-ol brut ainsi obtenu à une polymérisation complémentaire en présence de la quantité ajoutée de catalyseur basique avec au maximum 30% en poids d'oxyde d'éthylène par rapport au poids du polyéther-ol brut.